# EUROPEAN PATENT APPLICATION

(11) **EP 1 591 149 A1**
(43) Date of publication of application: **02.11.2005**
(21) Application number: 04252459.5
(22) Date of filing: 28.04.2004
(51) Int. Cl.: A63F 9/28

(54) **Hopper assembly for flat object dispenser**

(71) Applicant: Eastward Enterprises Ltd., Kowloon, Hong Kong (HK)
(72) Inventor: Chan, Tak Kwong Room 3711, Hui Sing House, Kowloon, Hong Kong (HK)
(74) Representative: Banford, Paul Clifford

(57) **Abstract**

A hopper assembly (10) for use with a domino dispensing vehicle (500), has a hopper (100) and a chute (200). The hopper (100) has a vertical body (110) for containing a stack of dominos, which has upper (120) and lower (130) open ends with the lower end being locatable on the vehicle (500) for supplying the dominos one by one thereto. The chute (200) has upper (210) and lower (220) open ends and is mounted at the upper end (120) of the hopper (100) for receiving and guiding the dominos to enter the hopper (100) at a predetermined entrance angle. Turning means (144) is provided between the hopper (100) and the chute (200) for turning an entering domino from the entrance angle to a horizontal position such that the domino will fall readily flat down onto the top of the stack.

## Description

The present invention relates to a hopper assembly for use with a vehicle or the like for dispensing dominos or similar flat objects.

### BACKGROUND OF THE INVENTION

Known article dispensing and positioning devices, for example as disclosed in US Patent No. 4,245,756, comprise a vehicle which supports an upright supply hopper storing a stack of dominos or the like. While the vehicle traveling on a horizontal surface, the vehicle dispenses the dominos one by one from the hopper to stand on the surface in a row. When the hopper runs out of dominos, it is desirable that new dominos be added to the hopper as the vehicle is in motion.

However, one would often find it difficult to ensure that the new dominos will stack up properly in the hopper, especially when the vehicle is moving.

The subject invention seeks to mitigate or at least alleviate such a shortcoming by providing an improved hopper assembly and a vehicle incorporating the same for dispensing flat objects.

### SUMMARY OF THE INVENTION

According to the invention, there is provided a hopper assembly for use with a vehicle for dispensing flat objects, comprising a hopper and a chute. The hopper has a vertical hollow body for containing a stack of said objects, which has upper and lower open ends with the lower end being locatable on said vehicle for supplying said objects one by one thereto. The chute has upper and lower open ends and is mounted at the upper end of the hopper for receiving and guiding said objects to enter the hopper at a predetermined entrance angle. Turning means is provided in the region between the hopper and the chute for turning an entering object from the entrance angle to a substantially horizontal position such that said object will fall readily flat down onto the top of said stack.

Preferably, the chute includes a passage inclined at the entrance angle and having a cross-section slightly larger than that of said objects for guiding said objects to enter the hopper at the entrance angle.

More preferably, said turning means comprises an obstacle provided at an exit of the passage for engagement by a said object traveling down the chute, whereupon said object turns about the obstacle under the action of gravity to a substantially horizontal position.

It is preferred that said turning means comprises an obstacle located in the path of movement of said objects leaving the chute, against which a said object leaving the chute is to hit and subsequently about which said leaving object is to turn under the action of gravity to a substantially horizontal position.

It is further preferred that the obstacle comprises a step.

In a specific construction, the hopper and the chute include respective walls having parts located adjacent each other to define an abutment as said turning means for abutting by said entering object to turn.

In a preferred embodiment, the hopper assembly includes a casing that supports the chute on the hopper at an inclined angle that determines the entrance angle.

More preferably, the casing bridges across the chute and the hopper for said objects to move from the chute to the hopper.

### BRIEF DESCRIPTION OF DRAWINGS

The invention will now be more particularly described, by way of example only, with reference to the accompanying drawings, in which:

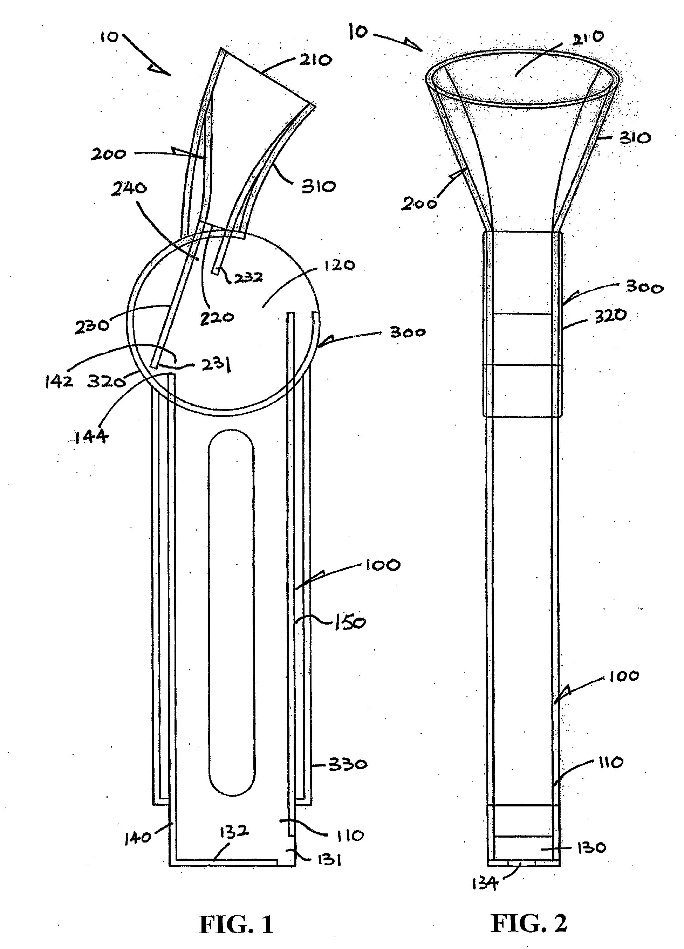

Figure 1 is a side view of an embodiment of a hopper assembly in accordance with the invention;
Figure 2 is a rear view of the hopper assembly of Figure 1; and

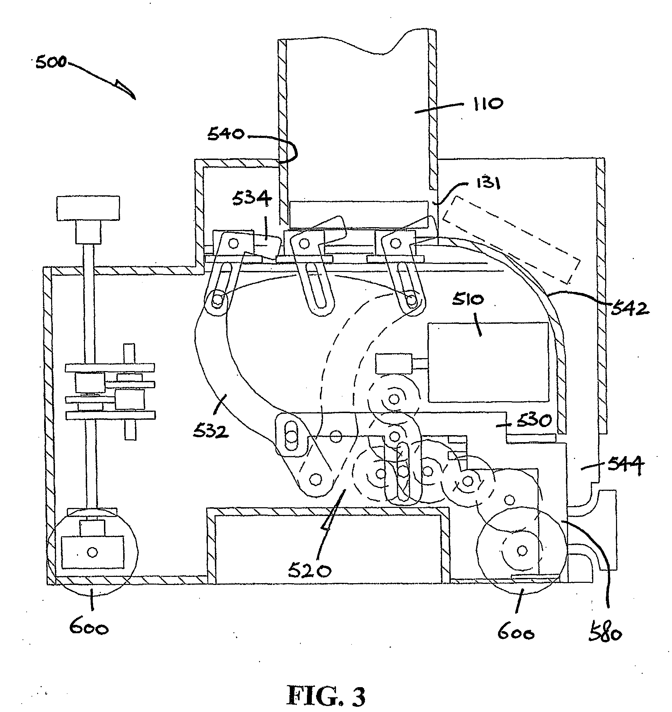

Figure 3 is a cross-sectional side view of a domino dispensing vehicle for using the hopper assembly of Figure 1.

### DETAILED DESCRIPTION OF PREFERRED EMBODIMENT

Referring to the drawings, there is shown a hopper assembly 10 embodying the invention for use with a vehicle 500 for dispensing dominos or similar flat objects, which assembly 10 comprises a hopper 100, a chute 200 and a casing 300. All of these components may made of transparent plastics material to reveal the dominos inside.

The hopper 100 has a rectangular upright hollow body 110 for containing a stack of dominos, having upper and lower open ends 120 and 130 and including a pair of opposite front and rear vertical side walls 140 and 150. The front wall 140 has its uppermost end presenting a horizontal lip 144. The lower end 130 has a horizontal base wall 132 for supporting the stack of dominos, which extends from the front wall 140 towards the rear wall 150 falling short thereof. The lower end of the rear wall 150 is shortened to form a side opening that acts as an exit 131 for the dominos to be dispensed horizontally and endwise from the hopper 100. The base wall 132 has a central slot 134 which extends down from the lowermost end of the front wall 140 to reach the exit 131 at its opposite end.

The chute 200 has a funnel-shaped upper open end 210 and a much smaller generally flat lower open end 220 that defines a passage 240. The upper end 210 serves to receive and guide the dominos to the lower end 220 for subsequently entering the hopper 100 through the passage 240 in a predefined manner. A tongue 130 extends integrally from the lower end 220 on the outer side, opposite which there is an inner side wall 232 that is considerably shorter.

The casing 300 has three hollow portions i.e. an upper funnel 310, a flat cylindrical middle part 320 and a lower rectangular-sectioned sleeve 330. The chute 200 is integrated within the funnel 310 at a slanted position such that the internal passage 240 is inclined at a predetermined angle of about 75° to horizontal. The sleeve 330 is integrated around the hopper 100. The middle part 320 connects the chute 200 above the hopper 100, with the chute lower end 220 and the hopper upper end 120 positioned inside the middle part 320 that bridges the chute 200 to the hopper 100 for the dominos to travel. The overall casing 300 may be made in a specific design for eye appeal.

The tongue 230 is inclined and extends to a position with its free end 231 being laterally outboard of the hopper lip 144, together forming a generally right-angled step 142. The step 142 is situated at the lower exit end of the passage 240 for engagement or hitting by a domino traveling down the chute 200, acting as an obstacle in the path of movement of the domino leaving the chute 200.

The vehicle 500 has two pairs of wheels 600 and an electric motor 510 whose output is transmitted by a gear train 520 to drive a rear pair of the wheels 600 so that the vehicle 500 can travel on a horizontal surface. A slider 530 is driven by a crank wheel 522 of the gear train 520 to slide back and forth. The slider 530 in turn swings a pivotable arm 532 in opposite directions, which is loosely hinged to the slider 530 and includes a finger 534 linked thereto.

The vehicle 500 includes a recess 540 into which the hopper 100 is located by its lower end 130, whereby the hopper assembly 10 is mounted on the vehicle 500. The finger 534 protrudes from below slightly into the bottom of the recess 540 and intercepts with the hopper base wall 132 through its slot 134. The bottom of the recess 540 turns smoothly downwardly along a curve 542 into a vertical rear opening 544, behind which there is provided an upright pusher 580 that being an integral part of the slider 530.

In operation, the vehicle 500 travels on the floor for example as driven by the motor 510. The motor 510 also simultaneously moves the slider 530 to pivot the arm 532 and hence the finger 534 back-and-forth. When the finger 534 moves backwards, it sweeps through the slot 134 to engage and thus slide the lowermost domino of the stack out of the hopper 100 through its rear exit 131. The domino will then slide down along the curve 542 and turn to stand upright on the floor as ensured by the pusher 580 within the rear opening 544, through which it will subsequently be pushed out by the pusher 580 as the slider 510 next moves rearwards. The dominos are dispensed one by one and lined up trailing and along the traveling path of the vehicle 500.

For refilling the hopper 100 with dominos, it is only necessary to drop the dominos one by one into the chute 200, with its upper end 210 collecting each domino into the passage 240. The passage 240 then guides the domino to slide down and enter the hopper 100 at a predetermined entrance angle that is the angle at which the passage 240 is inclined. When the domino is about to leave the chute 200, its lower forward end hits with its end surface upon the step 142 by the lip 144 and its upper rear end moves just clear of the shorter chute wall 232 opposite the tongue 230.

Upon hitting the lip 144, the domino turns about the lip 144 under the action of gravity from the entrance angle to a substantially horizontal position, with its forward end being retained by the tongue free end 231 so that the domino can only turn to fall. As soon as the domino turns to the horizontal position, its forward end becomes free from the lip 144, whereupon the domino will fall readily flat down onto the top of the stack remaining in the hopper 100.

In general, the hopper 100 is equivalent to a magazine whilst the chute 200 is in effect a funnel.

The invention has been given by way of example only, and various modification of and/or alterations to the described embodiment may be made by persons skilled in the art without departing from the scope of the invention as specified in the appended claims.

## Claims

1. A hopper assembly for use with a vehicle for dispensing flat objects, comprising:
a hopper having a vertical hollow body for containing a stack of said objects, the body having upper and lower open ends with the lower end being locatable on said vehicle for supplying said objects one by one thereto;
a chute having upper and lower open ends and mounted at the upper end of the hopper for receiving and guiding said objects to enter the hopper at a predetermined entrance angle; and
turning means provided in the region between the hopper and the chute for turning an entering object from the entrance angle to a substantially horizontal position such that said object will fall readily flat down onto the top of said stack.

2. The hopper assembly as claimed in claim 1, wherein the chute includes a passage inclined at the entrance angle and having a cross-section slightly larger than that of said objects for guiding said objects to enter the hopper at the entrance angle.

3. The hopper assembly as claimed in claim 2, wherein said turning means comprises an obstacle provided at an exit of the passage for engagement by a said object traveling down the chute, whereupon said object turns about the obstacle under the action of gravity to a substantially horizontal position.

4. The hopper assembly as claimed in claim 1, wherein said turning means comprises an obstacle located in the path of movement of said objects leaving the chute, against which a said object leaving the chute is to hit and subsequently about which said leaving object is to turn under the action of gravity to a substantially horizontal position.

5. The hopper assembly as claimed in claim 4, wherein the obstacle comprises a step.

6. The hopper assembly as claimed in claim 1, wherein the hopper and the chute include respective walls having parts located adjacent each other to define an abutment as said turning means for abutting by said entering object to turn.

7. The hopper assembly as claimed in claim 1, including a casing that supports the chute on the hopper at an inclined angle that determines the entrance angle.

8. The hopper assembly as claimed in claim 7, wherein the casing bridges across the chute and the hopper for said objects to move from the chute to the hopper.
